# EUROPÄISCHE PATENTSCHRIFT

(11) **EP 0 638 797 B1**
(45) Veröffentlichungstag und Bekanntmachung des Hinweises auf die Patenterteilung: **04.11.1998**
(21) Anmeldenummer: 94112579.1
(22) Anmeldetag: 11.08.1994
(51) Int. Cl.: G01N 15/02

(54) **Laser-Doppler-Gerät sowie Verfahren zum Betreiben eines solchen Gerätes**
Laser-doppler apparatus and procedure for its operation
Dispositif laser à effet doppler et procédé de mise en oeuvre

(30) Priorität: 11.08.1993 DE 4326979
(43) Veröffentlichungstag der Anmeldung: 15.02.1995
(73) Patentinhaber: DANTEC/INVENT MEASUREMENT TECHNOLOGY GmbH, 91058 Erlangen (DE)
(72) Erfinder: Durst, Franz Prof. Dr. Dr. hc, D-91094 Langensendelbach (DE); Xu, Tain Hua, D-91052 Erlangen (DE); Aizu, Yoshihisa Prof. Dr., Noboribetsu-shi, Hokkaido 059 (DE); Guesbet, Gérard Constant Gabriel Prof., F-76130 Mont Saint Aignan (FR); Grehan, Gérard Charles Robert Dr., F-76130 Mont Saint Aignan (FR); Onofri, Fabrice Roger Angelo, F-76150 Maromme (FR)
(74) Vertreter: Fehners, Klaus Friedrich, Dipl.-Ing., Dipl.-Wirtsch.-Ing.

(56) Entgegenhaltungen:
- EP-A- 0 144 310
- US-A- 4 540 283
- ICIASF '89: INTERNATIONAL CONGRESS ON INSTRUMENTATION IN AEROSPACE SIMULATION FACILITIES, DLR GÖTTINGEN 18-21 September 1989, pages 274-290 L. LADING ET AL. 'Estimating frequency and phase for velocity and size measurements'
- OPTICAL ENGINEERING, Bd.23, Nr.5, Oktober 1984, BELLINGHAM US Seiten 583 - 590 W.D. BACHALO 'Phase/Doppler spray analyzer for simultaneous measurements of drop size and velocity distributions'
- PROCEEDINGS OF THE LDA-SYMPOSIUM, KOPENHAGEN, 1975 Seiten 403-429 F.DURST ET AL: 'Laser-Doppler measurements in two-phase flows'

## Beschreibung

Die Erfindung bezieht sich auf ein Laser-Doppler-Gerät zum Messen des Durchmessers und der Geschwindigkeit eines sich in einer Strömung innerhalb eines Meßvolumens bewegenden Teilchens, dessen Durchmesser größer ist als etwa 1/5 der Ausdehnung des Meßvolumens, wobei das Meßvolumen als der Bereich bestimmt ist, in dem sich mindestens zwei von einer Vorrichtung erzeugte, zueinander in einer bestimmten Phasenbeziehung stehende Laserstrahlen kreuzen, mit mindestens zwei, auf das Meßvolumen ausgerichteten Detektor-Einheiten zur Erfassung und Detektierung der am zu vermessenden Teilchen gestreuten Laserstrahlen und zur Abgabe von Signalen, deren Amplitude von der Intensität der erfaßten Streustrahlung abhängen und mit einer Signalverarbeitungseinrichtung zur Ermittlung der Größe des Teilchens aus den Signalen der Detektor-Einheit. Weiter bezieht sich die Erfindung auf Verfahren zum Betreiben des Laser-Doppler-Gerätes.

Solche Laser-Doppler-Geräte sind beispielsweise aus der EP 0 144 310 bekannt und mit ihnen werden Feststoff-Teilchen, Tröpfchen in Gasen oder Gasblasen in Flüssigkeiten mittels Interferenzen des Streulichtes vermessen. Diese Teilchen in Luft, Tröpfchen in Gasen oder Gasblasen in Flüssigkeiten werden im folgenden stets als Teilchen bezeichnet.

Wie bereits einführend erwähnt, wird das Meßvolumen, in dem ein Teilchen vermessen werden kann, im wesentlichen durch den Bereich bestimmt, in dem sich mindestens zwei Laserstrahlen, die in fester Phasenbeziehung zueinander stehen, unter einem festen Winkel kreuzen. Es entstehen Interferenzstreifen in diesem Meßvolumen, die von der Oberfläche des zu vermessenden Teilchens gestreut, beispielsweise gebeugt oder reflektiert werden. Die gestreuten Uchtstrahlen aus den Interferenzstreifen werden von Detektor-Einheiten aufgenommen, deren Signale zur Ermittlung der Geschwindigkeit und Größe der Teilchen herangezogen werden.

Da sich die Teilchen in der Strömung bewegen, durchlaufen sie von den beiden Laserstrahlen erzeugte Interferenzstreifen, so daß intensitätsmodulierte Signale detektiert werden. Werden die Lichtintensitäten aus verschiedenen Winkelbereichen, also durch zwei räumlich unterschiedlich zueinander angeordnete Detektor-Einheiten aufgenommen, ergibt sich eine Phasenverschiebung zwischen den Signalen der beiden Detektor-Einheiten, die von der Größe der Teilchen abhängt. Solche Phasendifferenzen können sehr genau gemessen werden und sie sind deshalb für eine genaue Bestimmung der Größe der Teilchen besonders gut geeignet

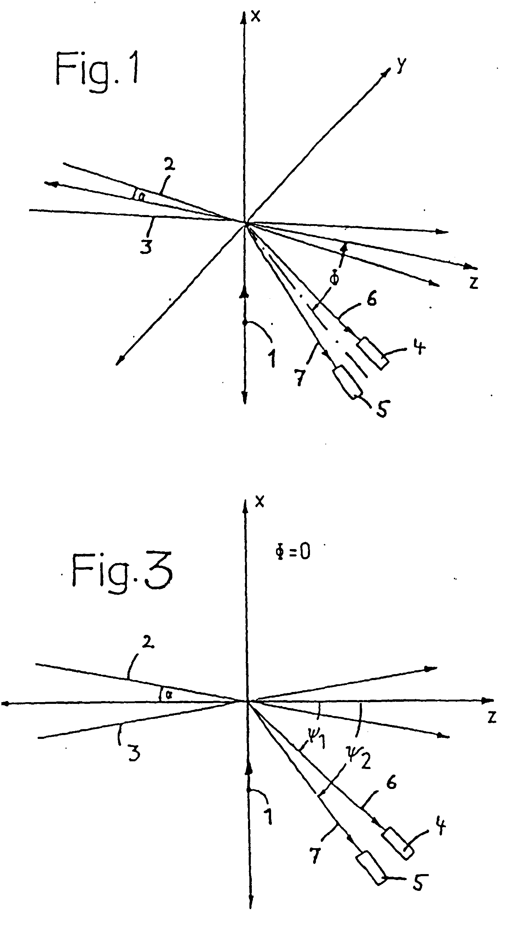

In solchen bekannten Laser-Doppler-Anemometern wird von den beiden sich kreuzenden Laserstrahlen eine Ebene aufgespannt, zu der die Ebene der Empfangsoptik und z-Achse senkrecht angeordnet sind. Dies ist Fig. 1 zu entnehmen, welche die Lage der Strahlen in der x-z-Ebene anzeigt und die Lage der Detektor-Einheiten etwas oberhalb und unterhalb der y-z-Ebene. Die von den beiden Detektor-Einheiten aufgespannte Ebene ist gegenüber der x-z-Ebene üblicherweise um einen Winkel Φ gedreht.

Bei großen Teilchen, insbesondere wenn die Teilchen einen Durchmesser größer als 1/5 der Ausdehnung des Meßvolumens aufweisen, ergeben sich bei bekannten Laser-Doppler-Geräten Fehlmessungen, die auf die Form der Laserstrahlen zurückzuführen sind. Zur Beschreibung der Intensitätsverteilung innerhalb eines Laserstrahls wird üblicherweise von einem Gaußprofil ausgegangen, so daß der Meßfehler, der aufgrund der Form der Laserstrahlen erzeugt wird, als "Gauß Beam Defekt" oder "Strahlprofilfehler" bezeichnet wird.

Es wurden bereits Versuche durchgeführt, diesen Strahlprofilfehler zu reduzieren. S.V. Sankar, A. Inenaga und W.D. Bachalao haben in "Trajectory dependent scattering in phase doppler interferometry: minimizing and eliminating sizing error", 6th International Symposium on Application of Laser Techniques to Fluid Mechanics, Lissabon/Portugal, Paper 12-2, July 20-23, 1992, vorgeschlagen, die Phasenbeziehung zwischen reflektierten und gebrochenen Komponenten zu ändern, indem der Winkel zwischen den beiden einfallenden Laserstrahlen gering geändert wird. Von D. Gréhan, G. Gouesbet, A. Naqwi und F. Durst wurde in verschiedenen Publikationen vorgeschlagen, mehrere Detektoren geometrisch zur optischen Achse anzuordnen und mit Hilfe unterschiedlicher Messungen den Strahlprofilfehler zu eliminieren bzw. beachtlich zu reduzieren.

Weiter wurden spezielle Rechentechniken angewandt, wie beispielsweise die von F. Onofri, C. Rozé und G. Gréhan in "Traitement des Signaux Phase Doppler et adl sujets aux effets de trajectoire: analyse par ondelettes", 9 èmes Journées d'Etudes sur les Aèrosols (Paris), Page 81-99, December 8-9, 1992, bei denen die Phasendifferenzen von Detektorsignalen auf Änderungen untersucht werden, die auf den Strahlprofilfehler zurückgeführt werden können, der schließlich bei der Auswertung der Daten Berücksichtigung findet

Alle diese bekannten Methoden sind nachteilig, da sie modellabhängige Korrekturen des Meßwertes für die Teilchengröße benötigen. Die Korrekturen sind zudem spezifisch für jede optische Anordnung und für jedes Teilchensystem neu anzustellen. Nachteilig ist ferner, daß durch solche Korrekturen üblicherweise auch systematische Fehler erzeugt werden, die aus dem verwendeten theoretischen Modell resultieren, d. h, aus der Umsetzung der daraus gewonnenen Erkenntnisse.

Aufgabe der Erfindung ist es deshalb, eine Vorrichtung und ein dazugehöriges Verfahren zu schaffen, mit welchen Meßwerte für die Teilchengröße bestimmt werden können, die im wesentlichen unabhängig von dem Intensitätsprofil der verwendeten Laserstrahlen sind, also den Strahlprofilfehler nicht aufweisen.

Ausgehend von den eingangs dargestellten bekannten Laser-Doppler-Geräten, die nach dem gattungsgemäßen Stand der Technik solche Laserstrahl- und Detektoreinrichtungen aufweisen, wie sie in Fig. 1 dargestellt sind, wird eine neue optische Anordnung vorgeschlagen, bei der die Laserstrahlen und die zwei Detektor-Einheiten mit einer Komponete des Strömungssektors so angeordnet sind, daß die Strömungskomponete, die Ausbreitungsvektoren für die Laserstrahlen und die Detektorrichtungsvektoren für die Detektor-Einheiten in einer gemeinsamen Ebene liegen und die Detektor-Einheiten mit ihren Detektorrichtungsvektoren so in der Ebene angeordnet sind, daß beide Streulicht von dem selben Teilchen erfassen.

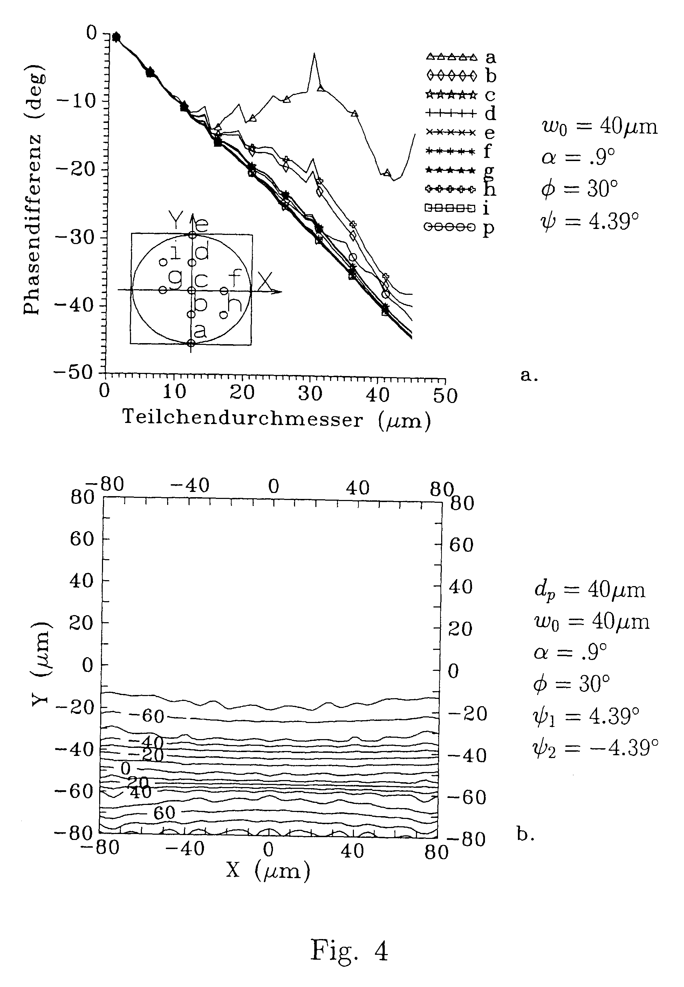

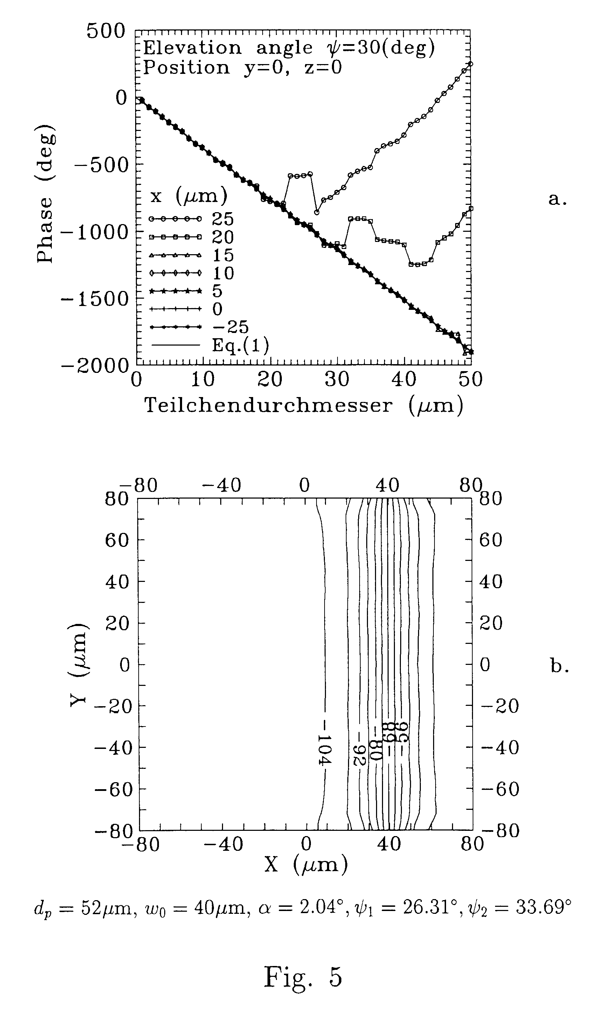

Diese erfindungsgemäße Vorrichtung unterscheidet sich im wesentlichen von dem Stand der Technik durch ihren planaren Aufbau. Während mit einer konventionellen Anordnung gemäß Fig. 1 die mit Strahlprofilfehlem versehenen Signale aus dem Bereich der negativen y-Achse resultieren, ist dies für den planaren Aufbau aus dem Bereich der positiven x-Achse der Fall. Durch den planaren Aufbau wird damit eine Rotation der Ebenen ereicht, in denen Phasenfehler auftreten. Dies ist in den Figuren 4 und 5 angedeutet. Fig. 4 entspricht dem Phasenfehler eines herkömmlichen Phasen-Doppler-Anemometers, während Fig. 5 dem Phasenfehler des planaren Systems entspricht. Während der Phasenfehler durch das Strahlprofil bei konventionellen Phasen-Doppler-Anemometer-Signalen nicht innerhalb des Signals lokalisiert werden kann, gelingt es den Strahlprofilfehler in der planaren optischen Anordnung im vorderen bzw. hinteren Teil der resultierenden Dopplersignale zu detektieren, je nach Bewegungsrichtung des Teilchens. Da die Bewegungsrichtung durch die Bestimmung des Vorzeichens des Geschwindigkeitsvektors bestimmt wird, gelingt so die Elimination des Strahlprofilfehlers.

Zunächst wurde von dieser neuen optischen Vorrichtung nur erwartet, daß sich der Strahlprofilfehler gegenüber den bisher bekannten Vorrichtungen und Meßmethoden verringert, unerwarteterweise verschwand der Strahlprofilfehler jedoch innerhalb eines großen Meßzeitintervalls vollständig. Dieser experimentelle Befund hat sich nach detaillierten Rechnungen aufgrund der Lorenz-Mie Theorie als generell richtig gezeigt, wobei die theoretischen Berechnungsergebnisse mit Hilfe von Experimenten in einem weiten Bereich sehr gut bestätigt werden konnten.

Diese Berechnungen und Experimente zeigten ferner, daß sich mit der erfindungsgemäßen Vorrichtung in vorteilhafterweise auch große Teilchen vermessen lassen, ohne daß besondere Korrekturen in den Ergebnissen für das Intensitätsprofil der Laserstrahlen angewandt werden müssen. Dies gestattet vor allem eine genauere Messung ganzer Teilchengrößenverteilungen, da die den für Korrekturen verwendeten theoretischen Überlegungen anhaftenden Unsicherheiten in der Umsetzung der Erkenntnisse ausgeschaltet werden.

Gemäß einer bevorzugten Weiterbildung des Laser-Doppler-Geräts weist die Vorrichtung zur Erzeugung der Laserstrahlen ein optisches System auf, mittels welchem der Winkel, unter dem die Laserstrahlen jeweils zur z-Achse im Meßvolumen aufeinandertreffen, veränderbar und wodurch das durch die beiden Laserstrahlen bestimmte Meßvolumen einstellbar ist. Damit weist der optische Aufbau all die positiven Merkmale auf, die von F. Durst und M. Zaré: Laserdoppelermeasurements in two phase flows. In Proceedings of LDA-Symposium Kopenhagen, Pages 403-429, 1975 für Phasen-Doppler-Messungen Anwendungen fanden.

Ein weiterer Vorteil der neuen optischen Anordnung liegt darin, daß bei hohen Teilchendichten in der Strömung das Meßvolumen so klein gehalten werden kann, daß sich in den meisten Fällen nur ein einzelnes Teilchen im Meßvolumen befindet, dessen gestreute Laserstrahlen dann detektiert werden. Dadurch werden Fehlmessungen ausgeschaltet, die darauf beruhen können, daß sich mehr als ein Teilchen im Meßvolumen aufhält. Um den Strahlprofilfehler auszuschalten, wurden in konventionellen Phasen-Doppler-Meßsystemen große Meßvolumina gewählt Meßvolumenreduktionen waren somit wegen des Strahlprofilfehlers bisher bei Geräten nach dem Stand der Technik nicht möglich, da die Meßvolumina immer kleiner als 1/5 des größten Teilchendurchmessers sein mußten. Man behalf sich deshalb mit Blenden oder Schlitzen, die vor dem Meßvolumen angeordnet waren, so daß möglichst wenig Teilchen durch die Detektorsysteme im Meßvolumen detektiert wurden. Dies ist bei dem erfindungsgemäßen Laser-Doppler-Gerät nicht mehr nötig. Bei diesem lassen sich gleichzeitige Messungen mehrerer Teilchen im Meßvolumen durch Reduktionen des Meßvolumens vermeiden, wodurch Messungen von Teilchengrößenverteilungen ohne Strahlprofilfehler noch bei hohen Teilchendichten möglich werden

Teilchengrößen können in unterschiedlicher Weise aus den Detektorsignalen gewonnen werden, beispielsweise durch Messung der Intensität, denn die gestreute Laserintensität eines 5 µm großen Teilchens ist zwei Größenordnungen kleiner als diejenige eines 150 pm großen Teilchens. Zur Verbesserung der Meßgenauigkeit wird aber zum Betrieb der Steuereinrichtung des Laser-Doppler-Geräts ein Verfahren angewandt, bei dem die aufgrund der Bewegung der Teilchen im Meßvolumen entstehenden Oszillationen der Signale der Detektoren registriert werden, die Phasendifferenz zwischen den Oszillationen in den Signalen der Detektoren bestimmt und die Phasendifferenz in einen die Größe der Teilchen bestimmenden Meßwert umgewandelt wird.
Das vorliegende Doppler-Meßverfahren verwendet im wesentlichen eine Zeitmessung zwischen den Oszillationen zur Größenbestimmung. Zeitmessungen können praktisch beliebig genau durchgeführt werden und hängen im wesentlichen nur von der Größe einer bei der Zeitmessung verwendeten Taktfrequenz ab. Dadurch kann eine wesentlich bessere Meßgenauigkeit erreicht werden als bei dem die Intensität betreffenden Meßverfahren.

Es ist eines der wesentlichen Merkmale des neuen Verfahrens, daß es in vorteilhafter Weise möglich wird, die detektierte Phasendifferenz der beiden Dopplersignale in Teilen zu verwerfen, entweder den vorderen oder den hinteren Teil, je nachdem, ob das Teilchen sich in positiver oder negativer x-Achse gemäß Fig. 3 bewegt Dabei ist eine strenge Ausrichtung entlang der x-Achse nicht notwendig, sondern nur das Auftreten einer x-Komponente des Geschwindigkeitsvektors des Teilchens.

Aufgrund der vorstehend beschriebenen besonderen Lage der Detektoren kann beim Eintritt des Teilchens in das oder beim Austritt aus dem Meßvolumen nur ein Teil des Beugungsbildes strahlprofilfehlerunabhängig sein. Der andere, noch immer mit Strahlprofilfehlem behaftete Teil des Signalverlaufs der Detektoren kann gemäß dieser Ausbildung des Verfahrens durch Verwerfung dieser Meßwerte ausgeschieden werden. Dadurch wird der Einfluß des Strahlprofilfehlers eliminiert und es wird eine höhere Meßgenauigkeit erreicht.

Experimente zeigten, daß dies andererseits den Nachteil hat, daß auch solche Meßwerte verworfen werden, die nur mit kleinen Unsicherheiten bezüglich des Strahlprofilfehlers behaftet sind. Da man jedoch möglichst viele Meßwerte pro Teilchen erhalten möchte, um daraus einen möglichst genauen Mittelwert der Phasenmessung bestimmen zu können, sieht eine bevorzugte Weiterbildung des Verfahrens vor, daß die Phasendifferenzen dann verworfen werden, wenn die Amplitude der Oszillation des Signals eines Detektors kleiner als das Produkt aus einem vorgegebenen Verhältniswert mit der maximalen Amplitude der während einer Bewegung des Teilchens im Detektor erzeugten Oszillation ist.
Dieses Verfahrensmerkmal gibt zum einen ein genaues Kriterium für die Verwendung der Meßwerte der Phasendifferenz vor, andererseits erlaubt die Festlegung eines Verhältniswertes auch, die verlangte Genauigkeit bezüglich des Mittelwertes einerseits und des noch enthaltenen Strahlprofilfehlers andererseits zu optimieren.

Vorzugsweise liegt der vorgegebene Verhältniswert bei 0,5.
Dieser Wert wurde gewählt, da sowohl Messungen als auch Rechnungen zeigten, daß bei Annahme eines Gauß'schen Intensitätsprofils des Laserstrahls bei einem vorgegebenen Verhältniswert von 0,5 ein wesentlicher Einfluß des Strahlprofilfehlers nicht mehr zu erwarten ist.

Wie vorstehend schon erwähnt wurde, kann auch die Teilchengröße aus der Signalhöhe eines Detektors bestimmt werden, da die von einem Teilchen gestreute Lichtintensität überproportional mit der Teilchengröße ansteigt. Zwar kann eine solche Messung nicht mit der gleichen Genauigkeit wie eine Phasendifferenzmessung durchgeführt werden, jedoch kann sie dazu verwendet werden, eine ungefähre Teilchengröße zu bestimmen, die bei einer Phasendifferenzmessung eine Entscheidung dahingehend ermöglicht, ob die gemessene Phase direkt verwendet werden kann oder ein vielfaches von 2π aufaddiert werden muß.

Messungen von Phasendifferenzen haben bekanntermaßen den Nachteil, daß eine Phase nur innerhalb von 0 bis 2π bestimmt werden kann, während das Intervall, in dem sich eine theoretisch berechnete Phasendifferenz für die Teilchengröße befinden kann, auch bei 0 bis 2π, 2π bis 4π, usw. liegen kann. Zur Festlegung des Intervalls sieht eine Weiterbildung des Verfahrens vor, daß aus der Signalhöhe mindestens eines Detektors eine ungefähre Teilchengröße bestimmt und dieser Wert benutzt wird, um Unsicherheiten der Phasendifferenz bezüglich 2π zu eliminieren.

Eine weitere vorteilhafte Weiterbildung des Verfahrens, die jedoch auch mit dem vorstehend beschriebenen Verfahren zusammen verwendet werden kann, um Unsicherheiten bezüglich 2π in der Phasendifferenz zu eliminieren, sieht vor, daß mehr als zwei Detektoren angeordnet sind und daß die Phasendifferenzen zwischen jeweils zwei von diesen Detektoren bestimmt und auf Übereinstimmung bezüglich gleicher Teilchengröße miteinander verglichen werden.
Dieses Verfahren beruht auf der Erkenntnis, daß unter verschiedenen Winkeln angeordnete Detektoren bei gleicher Teilchengröße unterschiedliche Phasendifferenzen bedingen, so daß die Phasendifferenzen zwischen den Signalen mehrerer Detektorpaare nur dann zu übereinstimmenden Teilchengrößen führen, wenn jeweils das richtige Vielfache von 2π auf die gemessene Phasendifferenz aufgeschlagen wird. Durch Vergleich der Meßwerte verschiedener Detektorpaare ist es daher möglich, die genannten Unsicherheiten bezüglich eines Phasenvielfachen von 2π auszuschließen.

Bei dem vorbeschriebenen Verfahren fallen auch mehr Meßwerte an als bei einem nur mit zwei Detektoren arbeitenden Verfahren, die nun aber nicht nur dazu verwendet werden können, die Phasenunsicherheit zu eliminieren. In vorteilhafter Weiterbildung des Verfahrens werden die Phasendifferenzen, bei denen die Unsicherheiten bezüglich 2π eliminiert sind, zur Bestimmung einer mittleren, aus den verschiedenen Signalwerten gemessenen Teilchengröße verwendet. Hierdurch verbessert sich aufgrund der größeren Statistik in den gemessenen Teilchengrößen der Meßwert der Teilchengröße, es wird folglich ein genauerer Meßwert erreicht.

Wie bereits oben erwähnt, ist es möglich, daß sich bei hohen Teilchenkonzentrationen in der Strömung mehr als ein Teilchen während einer Messung innerhalb des Meßvolumens befindet, wodurch diese Teilchen dann ein fehlerhaftes Signal erzeugen. Um solche unerwünschten Situationen zu erkennen, sind mehrere Verfahrensschritte vorgesehen.

In vorteilhafter Ausbildung des Verfahrens werden die bei einem Durchlauf des Teilchens durch das Meßvolumen bestimmten Phasendifferenzen oder die ihnen zugeordneten Meßwerte für die Größe des Teilchens miteinander verglichen und bei außerhalb der Meßgenauigkeit liegenden Abweichungen sämtliche während des Durchlaufs aufgenommenen Meßwerte verworfen.
Das Meßverfahren läßt sich auch auf stationäre schwebende Teilchen anwenden. Zur Messung wird das Meßvolumen über die Teilchen bewegt. Es resultieren so Mehrfachmessungen. Die unterschiedlichen Phasendifferenzen oder die zugeordneten Meßwerte für die Größe des Teilchens bilden eine angenähert Gauß'sche Verteilung, wenn nur ein Teilchen innerhalb des Meßvolumens enthalten ist. Befinden sich aber mehr als ein Teilchen innerhalb des Meßvolumens, dann werden die den Phasendifferenzen oder die ihnen zugeordneten Meßwerte breiter als eine Gauß-Verteilung sein, im Extremfall können sogar zwei Gauß-Verteilungen für die Meßwerte auftreten. Dies läßt sich durch eine zu große mittlere Abweichung vom Mittelwert erkennen, solche Meßwerte sind zur Vermeidung von Fehlmessungen zu verwerfen, dadurch wird die Meßgenauigkeit weiter erhöht.

Bei einer anderen vorteilhaften Weiterbildung des Verfahrens werden die Signale der Detektoren bei Durchlauf eines Teilchens durch das Meßvolumen mit theoretischen Signalverläufen, die für unterschiedliche Teilchengrößen und Geschwindigkeiten vorgegeben werden, verglichen und bei großen Abweichungen der Signalverläufe von den theoretischen Signalverläufen die Meßwerte verworfen.
Dieses Verfahren ist gegenüber dem vorangehend beschriebenen genauer, da sämtliche Daten des Signalverlaufes berücksichtigt werden. Allerdings ist der zu betreibende mathematische Aufwand größer und dieses Verfahren daher nur bei unkritischem Zeitverhalten bei der Aufnahme der Meßwerte besonders vorteilhaft.

In der Praxis ist die Größe eines einzelnen Teilchens nur von geringerem Interesse, demgegenüber ist aber eine genaue Meßwertverteilung für unterschiedliche Teilchengrößen erwünscht. Aus diesem Grunde sieht eine weitere bevorzugte Weiterbildung des Verfahrens vor, das eine Meßwertverteilung aus den gemessenen Teilchengrößen ermittelt und die Meßwertverteilung bezüglich einer durch das Meßvolumen gegebenen Akzeptanz und Verlusten aufgrund verworfener Messungen korrigiert werden.

Grundsätzlich könnte man das Laser-Doppler-Gerät mit einer Signalverarbeitungseinrichtung ausrüsten, bei der die Verfahrensschritte automatisch mit Hilfe einer festverdrahteten Elektronik durchgeführt werden. Diese ist aber besonders aufwendig, wenig flexibel und auch wohl für die vorbeschriebenen Verfahrensschritte zu teuer. Aus diesem Grunde wird vorgeschlagen, daß das Laser-Doppler-Gerät vorteilhaft zur Durchführung mindestens eines der vorgenannten Verfahren einen Computer enthält.

Weitere Merkmale und Vorteile der Erfindung lassen sich auch aus den an Hand der Zeichnungen nachstehend beschrieben Ausführungsbeispielen ersehen.

Es zeigen:
Fig. 1 eine Darstellung der geometrischen Anordnung von Laserstrahlen und Detektoren im Verhältnis zur Strömung nach dem Stand der Technik;
Fig. 2 schematische Darstellungen a und b zur Erläuterung des Strahlprofilfehlers;
Fig. 3 eine Darstellung der geometrischen Anordnung von Laserstrahlen und Detektoren im Verhältnis zur Strömung nach einem erfindungsgemäßen Ausführungsbeispiel;
Fig. 4 eine Darstellung des Verlaufes der Phasenverteilung von PDA-Signalen für konventionellen optischen Aufbau;
Fig. 5 eine Darstellung des Verlaufs von Phasenfehlern von PDA-Signalen mit planarem optischen Aufbau nach der Erfindung und
Fig. 6 eine Darstellung a des Signalverlaufs an einem Detektor und eine Darstellung b des zeitlichen Verlaufs von Phasendifferenzen für ein durch das Meßvolumen laufendes Teilchen in einer Anordnung nach einem Ausführungsbeispiel gemäß Fig. 3.

Zur Verdeutlichung der Lage der einzelnen Komponenten eines Laser-Doppler-Gerätes nach dem Stand der Technik zeigt Fig. 1 ein Koordinatensystem mit den durch x, y und z bezeichneten Koordinaten.

Das in einem Medium sich befindende Teilchen 1 strömt in x-Richtung ein, die Strömungsrichtung ist durch den diesem zugeordneten Strömungsvektor eingezeichnet. In der y-z-Ebene breiten sich zwei Laserstrahlen 2 und 3 aus, die aufgrund einer definierten Phasenbeziehung ein Interferenzbild in der Nähe des Nullpunktes des Koordinatensystemes erzeugen. Diese Laserstrahlen 2 und 3 breiten sich jeweils unter einem Winkel α zur z-Achse aus.

Zur Sicherstellung einer definierten Phasenbeziehung werden die beiden Laserstrahlen 2 und 3 mittels eines Strahlteilers und eines Spiegelsystemes aus einem einzigen Laserstrahl erzeugt Bei besonderen Ausführungsformen der Laser-Vorrichtung wird das Spiegelsystem auch dazu verwendet, je nach unterschiedlichen Meßanforderungen den Winkel α variabel einstellbar zu halten.

Durchläuft das Teilchen 1 das von den Lasern 2 und 3 erzeugte Interferenzbild, werden die Intensitäten in den Interferenzstreifen in verschiedene Richtungen, zeitlich oszillierend und mit unterschiedlicher Intensität gestreut. Zur Aufnahme des gestreuten Lichts dienen Detektoren 4 und 5, die, ähnlich wie die Laserstrahlen 2 und 3, in einer Ebene angeordnet sind, die aber um einen Winkel Φ aus der y-z-Ebene herausgedreht ist. Von den Positionen der Detektoren 4 und 5 lassen sich Verbindungslinien zum Koordinatenursprung ziehen, diese werden im folgenden als Detektorrichtungsvektoren 6 und 7 bezeichnet In die Richtung dieser Detektorrichtungsvektoren 6 und 7 sind die beiden Detektoren 4 und 5 hinsichtlich ihrer maximalen Empfindlichkeit ausgerichtet.

Die Laserstrahlen 2 und 3 definieren nun durch die Breite ihrer Intensitätsverteilung im Bereich des Koordinatenursprungs ein Meßvolumen. Wie bereits oben dargelegt, streut ein das Meßvolumen durchlaufendes Teilchen 1 die Intensität der Interferenzstreifen in Richtung der Detektoren 4 und 5, die Signale aufnehmen, die wegen der Bewegung des Teilchens oszillieren. Die Phasendifferenz zwischen den auf die Detektoren 4 und 5 auffallenden oszillierenden Uchtintensitäten werden nun nach dem Stand der Technik dazu verwendet, die Teilchengrößen zu ermitteln.

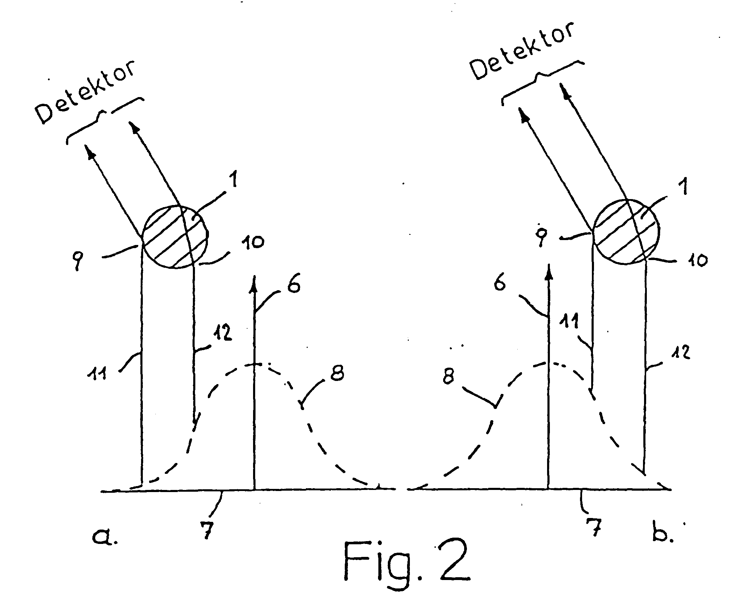

Bei einem solchen Laser-Doppler-Gerät nach dem Stand der Technik entstehen aber bei großen Teilchen 1 Meßfehler aufgrund des Intensitätsprofils des Laserstrahls. Diese Meßfehler verhindern eine genaue Messung. Anhand der Fig. 2 wird nun zunächst das Intensitätsprofil eines Laserstrahls und seine Auswirkungen auf das zu messende Teilchen 1 erläutert.

Die Figuren 2a und 2 b zeigen unterschiedliche Positionen eines Teilchens 1 im Verhältnis zu einem Laserstrahl. In diesen Figuren sind jeweils die Achsen 6 und 7 eines Koordinatensystemes eingezeichnet, wobei die Achsen 6 jeweils die Lichtintensität eines Laserstrahls in Abhängigkeit des auf den Achsen 7 aufgetragenen Abstandes von der Strahlmitte angibt. Die jeweils in den Koordinatensystemen eingezeichnete Gauß-Verteilung 8 beschreibt die Intensitätsverteilung des Laserstrahls.

In den Figuren 2a und 2b ist jeweils ein Teilchen 1 eingezeichnet, das sich in Fig. 2a links und in Fig. 2b rechts von der Gauß-Verteilung befindet. Weiter sind jeweils an den Teilchen zwei Punkte 9 und 10 bezeichnet, an denen jeweils die Uchtstrahlen 11 und 12 in Richtung der Detektoren gestreut werden. In diesem Fall, wird Lichtstrahl 11 reflektiert und Lichtstrahl 12 gebeugt.

Diesen Darstellungen ist zu entnehmen, daß die Lichtstrahlen 11 und 12 unterschiedliche Intensitäten aufweisen, obwohl sie jeweils an denselben Punkten 9 und 10 gestreut werden, nämlich in Abhängigkeit der Stellung des Teilchens 1 im Laserstrahl.

Im Meßverfahren äußert sich dies dadurch, daß auch die durch die Laserstrahlen entstehenden Interferenzstreifen, die von den Detektoren als Oszillation in der durch das hindurchlaufende Teilchen 1 gestreuten Lichtintensität empfangen werden, unterschiedlich sind. Aufgrund dessen hängt auch die Phasendifferenz zwischen den Signalen zweier Detektoren von der Position des Teilchens 1 zur Achse 7 ab, wobei die Größe des Teilchens eine Rolle spielt Daraus resultiert ein Meßfehler für die Teilchengröße, der nur dann klein ist, wenn sich das Teilchen 1 in einer Position links der Gauß-Verteilung 8 befindet.

Der aufgrund des Strahlprofils entstehende Fehler ist dann besonders groß, wenn der Durchmesser des Teilchens 1 in derselben Größenordnung wie die Breite der Gauß-Verteilung 8 liegt. Rechnungen haben gezeigt, daß der Fehler aufgrund der Gauß'schen Intensitätsverteilung eines Laserstrahls dann nicht mehr zu vernachlässigen ist, wenn der Durchmesser des zu messenden Teilchens 1 größer als 1/5 der Breite der Gauß-Verteilung 8 ist.

Überraschend hat sich nun gezeigt, daß ein Laser-Doppler-Gerät, das gemäß der in Fig. 3 gezeigten Geometrie aufgebaut ist, wesentlich unempfindlicher gegenüber dem Intensitätsprofil der Laserstrahlen 2 und 3 ist und deshalb für genauere Messungen der Teilchengröße verwendet werden kann. Diese Unempfindlichkeit gegenüber der Form der Laserstrahlen 2 und 3 wurde sowohl theoretisch als auch experimentell untersucht, dabei wurde herausgefunden, daß für die Vermeidung des Strahlprofilfehlers zwei Merkmale ursächlich sind.

Zunächst ist das System planar aufgebaut, d.h., der Strömungsrichtungsvektor des Teilchens 1, die Ausbreitungsvektoren der Laserstrahlen 9 und 10 sowie die Detektorrichtungsvektoren 6 und 7 der Detektoren 4 und 5 liegen in einer Ebene, hier der x-z-Ebene.

Darüber hinaus liegen die Detektoren 4 und 5 entweder, wie aus Fig. 3 ersichtlich, in der von dem negativen Teil der x-Achse und dem positiven Teil der z-Achse, oder in der von dem positiven Teil der x-Achse und dem positiven Teil der z-Achse gebildeten Ebene. Durch diese Anordnung ist gewährleistet, daß beide Detektoren jeweils Streulicht von denselben Oberflächen des Teilchens 1 erfassen, nämlich entweder von der bezüglich der Strömungsrichtung hinteren oder der vorderen Oberfläche. Dabei sprechen die Detektoren 4 und 5 aber erst an, wenn das Teilchen 1 sich Innerhalb des Meßvolumens befindet, wodurch die Intensitäten des sich längs der Detektorrichtungsvektoren 6 und 7 ausbreitenden, am Teilchen 1 gestreuten Lichts wesentlich unempfindlicher gegenüber dem Strahlprofilfehler sind, als beim Stande der Technik.

Bei der in Fig. 3 gezeigten Meßanordnung kann sich der Strahlprofilfehler jedoch noch beim Austritt des Teilchens 1 aus dem Meßvolumen auswirken, daraus resultierende Fehlmessungen lassen sich aber leicht vermeiden, wie später noch beschrieben wird.

Wären die Detektoren 4 und 5 innerhalb der von der positiven x-Achse und der positiven z-Achse aufgespannten Ebene angeordnet, kehrten sich die Verhältnisse um, da der Strahlprofilfehler dann beim Eintritt des Teilchens in das Meßvolumen erzeugt wird, während sich dieser beim Austritt verringert.

Fig. 4 zeigt auf, daß bei herkömmlichen Phasen-Doppler-Anemometem die resultierenden Strahlprofilfehler dadurch auftreten, daß Signale aus Gebieten resultieren, die in Bereichen liegen, die durch negative y-Werte charakterisiert sind. Negative y-Werte sind jedoch in den Phasen-Doppler-Signalen nicht erkenntlich, so daß es schwierig ist, die resultierenden Fehler zu detektieren. Diese Fehler sind dadurch gekennzeichnet, daß innerhalb des Gebiets mit negativen y-Werten unterschiedliche Phasendifferenzen detektiert werden, je nach Position des Teilchens in diesem Bereich. Würde es gelingen festzustellen, daß das Signal von einem Bereich resultiert, der negativen y-Werten entspricht, wäre eine Elimination der Fehler möglich.

Fig. 5 zeigt, daß das planare optische System zu Phasenfehlern führt, die vor allem aus einem Bereich resultieren, der durch positive x-Werte gekennzeichnet ist Fehler aus diesem Bereich des Signals sind vorteilhaft, da sie dem zeitlich später gelegenen Teil des Phasen-Doppler-Signals entsprechen, d.h. es gibt innerhalb des Dopplersignals Regionen, welche den Gaussian Strahl Defekt aufweisen und damit können Phasendifferenzen aus diesem Teil des Signals detektiert und eliminiert werden.

Der wesentliche Aufbau von Laser-Doppler-Geräten ist aus dem Stand der Technik bekannt. Demgegenüber besteht das Neue und Erfinderische bei dem hier vorgeschlagenen Laser-Doppler-Gerät in der vorstehend beschriebenen geometrischen Anordnung. Für experimentelle Studien wurde ein der Fig. 3 entsprechendes Ausführungsbeispiel erstellt, bei welchem der Laser eine Wellenlänge von 0,6328 µm hatte, der Winkel a zu 2,04° gewählt wurde, der Gauß'sche Radius des Profils der Intensitätsverteilung (1/e² Punkt) 64 µm und die in Fig. 3 eingezeichneten Winkel ψ 1 und ψ 2 jeweils einen Wert von 26,31° für ψ1 und 33,36° für ψ2 aufwiesen. Die Detektoren waren so ausgelegt, daß sie einen Raumwinkelbereich von 2,77° erfaßten. Die von den Detektoren 11 und 12 abgegebenen Signale wurden mit einem LeCroy-9400 digitalen Oszilloskop digitalisiert und aufgezeichnet. Phasendifferenzen wurden über die Nulldurchgänge der Signale bestimmt. Zur Erzeugung einer großen Genauigkeit wurden die Daten mit einer Aufnahmefrequenz aufgenommen, die 130 mal größer als die Frequenz der Oszillation in der Signalintensität war.

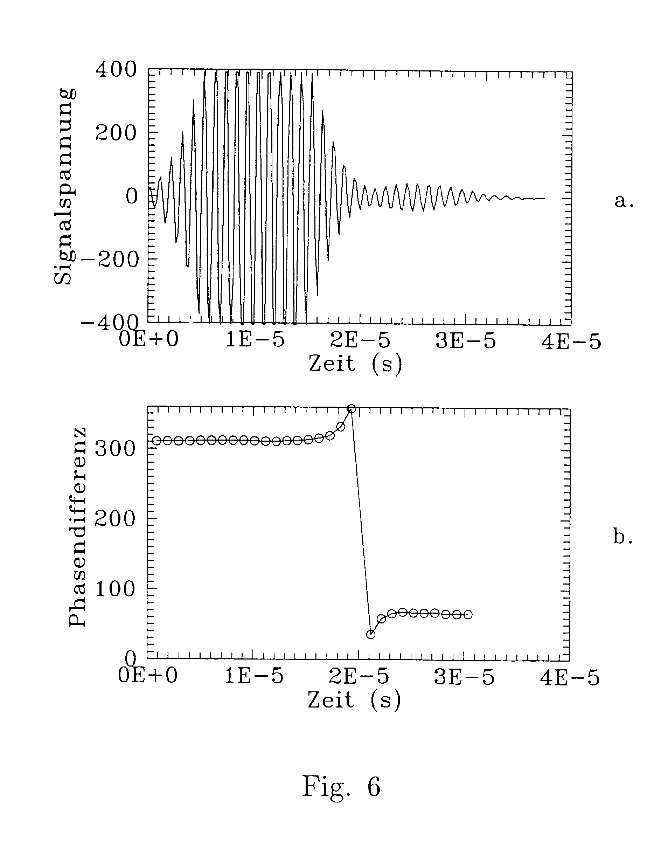

Fig. 6 zeigt mit seinen graphischen Bildern a und b die Messung eines Teilchens mit einem Durchmesser von 168 µm. Dieses Teilchen ist also wesentlich größer als das Meßvolumen.

In Fig. 6a ist die Signalspannung an einem Detektor 11 bzw. 12 in Abhängigkeit der Zeit dargestellt, die das Teilchen zum Durchlaufen des Meßvolumens benötigt.
Das Signal zeigt deutliche Oszillationen, die auf das Durchlaufen des Teilchens durch die von den Laserstrahlen 2 und 3 erzeugten Interferenzstreifen zurückzuführen sind. Die Amplitude der Oszillationen nimmt bis zu dem Zeitpunkt von 10⁻⁵ sec zu und fällt danach wieder ab. Dieses Ansteigen und Abfallen der Amplitude ist auf die Form der Laserstrahlen zurückzuführen. Die Hüllkurve zeigt auch, daß das Strahlprofil der Laserstrahlen 2 und 3 bei einem derartigen Amplitudenverhalten einen annähernden Gauß'schen Verlauf zeigt.

Fig. 6b zeigt die Phasendifferenz zwischen den Oszillationen in den Signalspannungen der Detektoren 4 bzw. 5 in Abhängigkeit von der Meßzeit. Unterhalb einer Meßzeit von 1,8 x 10⁻⁵ sec ist die jeweils ermittelte Phasendifferenz konstant Hieraus ist zu folgem, daß Strahlprofilfehler in diesem Bereich nicht oder nur wenig ins Gewicht fallen Danach steigt die Phasendifferenz jedoch an, um anschließend plötzlich wieder abzufallen. Der Anstieg ist auf die Fehler in der Phasendifferenz aufgrund des Strahlprofils der Laserstrahlen 2 und 3 zurückzuführen, wenn nämlich das Teilchen aus dem Meßvolumen heraustritt Würden sich die Detektoren 4 und 5 in der von den beiden positiven x- bzw. z-Achsen aufgespannten Ebene befinden, würde die Phasendifferenz in Abhängigkeit von der Zeit beim Austritt nach verlaufen, jedoch würden sich Fehler aufgrund des Gauß'schen Strahlprofils der Laserstrahlen 2 und 3 beim Eintritt des Teilchens 1 in das Meßvolumen ergeben.

Fig. 6b zeigt nun aber auch deutlich, daß während eines Großteils der Meßzeit, in der das Teilchen das Meßvolumen durchläuft, die Phasendifferenz und damit auch die Teilchengröße unabhängig vom Strahlprofilfehler messen kann. Die beim Austritt aus dem Meßvolumen auftretenden Fehlmessungen lassen sich durch Schnitte in einem aufgenommenen Datensatz eliminieren. Bei dem gezeigten Beispiel würden die Daten oberhalb von 1,7 x 10⁻⁵ sec unberücksichtigt bleiben, d.h., die Daten, bei denen die maximale Amplitude der Oszillation kleiner ist als die Hälfte der maximalen Signalspannung, die während der Messung eines Teilchens erreicht wird, würden herausgeschnitten werden.

Bei dem vorstehend beschriebenen Ausführungsbeispiel erfolgte die Datenaufnahme mit einem digitalen Oszilloskop und die Auswertung größtenteils per Hand, deshalb ist diese Methode für eine kommerzielle Verwertung nur begrenzt geeignet Aus diesem Grunde wird vorgeschlagen, zur Datenaufnahme eine speziell dafür vorgesehene Elektronik einzusetzen, welche die Datenerfassung und -Auswertung automatisiert. Eine solche Elektronik könnte in einfacher Weise mit elektronischen Standardbauelementen aufgebaut werden, um aber dem Benutzer eines Laser-Doppler-Gerätes nach der Erfindung möglichst viel Komfort und große Flexibilität für Weiterverbesserungen zu schaffen, ist es empfehlenswert einen Computer vorzusehen, der nicht nur die Daten aufnimmt, sondern auch unterschiedliche Verfahrensschritte durchführt.

Ein solcher Computer ist auch dazu geeignet, auf die Vorrichtung zur Erzeugung der beiden Laserstrahlen 2 und 3 und insbesondere auch die Einstellung des Winkels α und des damit zusammenhängenden Meßvolumens zu betätigen. Zu diesem Zweck ist in der Vorrichtung ein vom Computer ansteuerbares optisches System vorgesehen.

Zur Aufnahme der von den Detektoren 4 und 5 erzeugten Signalspannungen sind Analog-/Digitalwandler vorgesehen, mittels derer der Computer die Signalspannungen einlesen kann. Vorteilhaft erfolgt die Datenaufnahme über einen direkten Speicherzugriff. Diese Technik, die allgemein als Direct Memory Access (DMA) bekannt ist, stellt dem Computer ausreichend Zeit zur Bearbeitung auch komplizierterer Verfahrensschritte zur Verfügung, da er selbst von der Datenaufnahme entlastet ist.

Ein wesentlicher Programmteil des Computers ist für die Ausführung der Verfahrensschritte zur Ermittlung der Phasendifferenz und zur Berechnung der Teilchengröße vorgesehen. Er führt aber auch aufgrund der Höhe von Signalspannungen notwendige Schnitte aus, um die durch Strahlprofilfehler beeinflußten Meßwerte zu verwerfen, wie dies oben am Beispiel der Fig. 6 beschrieben wurde. Beim Schneiden der Datenmenge wird berücksichtigt, daß die Teilchen beim Austritt aus dem Meßvolumen eine Amplitude des Signals in einem der Detektoren 4 und 5 hervorrufen, die kleiner als die maximale Amplitude während des Durchlaufens eines Teilchens durch das Meßvolumen ist.

Das Computerprogramm verwendet aber auch die aufgenommene Signalhöhe dazu, bereits aufgrund der Signalintensität eine ungefähre Teilchengröße zu bestimmen, was dadurch ermöglicht wird, daß die Signalhöhe überproportional mit der Teilchengröße ansteigt. Dieser Näherungswert für die Teilchengröße wird dazu verwendet, ein mehrfaches von 2π auf die gemessene Phasendifferenz aufzuschlagen, wenn die so ermittelte Teilchengröße zu stark von der durch die Phasendifferenz erzeugte Teilchengröße abweicht. Auf diese Weise werden Unsicherheiten in der Phasendifferenz bezüglich eines vielfachen von 2π eliminiert.

Eine solche Eliminierung der Phasendifferenz-Unsicherheiten ist auch durch die Anordnung zusätzlicher Detektoren möglich, wodurch mehrere Datensätze von Phasendifferenzen verschiedener Detektorpaare vorliegen, aufgrund derer dann entschieden werden kann, welche Phasendifferenz, also von Null bis 2π, 2π bis 4π, 4π bis 6π, usw., der Teilchengröße zuzuordnen ist.

Ein solches, mit mehr als zwei Detektoren arbeitendes Verfahren erfordert, auch wenn es die Signalerfassung betrifft, einen höheren Aufwand, hat aber auch den großen Vorteil, daß zusätzliche Meßwerte für die Teilchengröße ermittelt werden, wodurch bei der Ermittlung der mittleren Teilchengröße Fehler vermieden werden und eine größere Meßgenauigkeit erreicht werden kann.

Bei der Mittelung der Teilchengröße auf der Basis unterschiedlicher Phasendifferenzen läßt sich zusätzlich auch die mittlere quadratische Abweichung errechnen, diese ist nämlich ein direktes Maß für die Meßgenauigkeit, kann aber auch bei zu großen Werten anzeigen, daß im Meßvolumen eine Fehlmessung vorgelegen hat, beispielsweise in der Form, daß sich mehr als ein Teilchen im Meßvolumen befand. Solche Messungen werden dann nicht in den endgültigen Datensatz aufgenommen.

Um solche fehlerhaften Messungen herauszufinden, ist auch vorgesehen, die Signalspannungen der Detektoren mit theoretischen Signalverläufen bei unterschiedlichen Teilchengrößen und Geschwindigkeiten zu vergleichen und bei zu großen Abweichungen der Daten von den theoretischen Signalverläufen die Meßwerte dann zu verwerfen.

Ein solcher Vergleich kann nach der Methode der kleinsten Quadrate durchgeführt werden, wobei die Differenz eines Signals zum Wert des theoretischen Signalverlaufs ins Verhältnis zum erwarteten Meßfehler gesetzt und das Verhältnis quadriert wird. Aus der Summe der Quadrate für alle aufgenommenen Meßwerte wird eine Größe gebildet, die üblicherweise mit χ² bezeichnet wird. Teilchengröße und -Geschwindigkeit werden bei den theoretischen Signalverläufen so gewählt, daß χ² minimiert wird. Nach der Statistik wird für eine große Anzahl der Freiheitsgrade, hier die Anzahl der Meßwerte, erwartet, daß χ² ungefähr gleich der Anzahl der Freiheitsgrade ist, so daß fehlerhafte Messungen bei den hier beschriebenen Verfahren, beispielsweise dann, wenn sich zwei Teilchen im Meßvolumen aufgehalten haben, dadurch erkannt werden, daß der Wert für χ² zu groß wird. Man könnte also erfaßte Daten dann verwerfen, wenn χ² doppelt so groß wie die Anzahl der Freiheitsgrade ist.

Schließlich gewährleistet dieses Verfahren eine größere Genauigkeit zur Bestimmung der Teilchengröße und -geschwindigkeit, da hier der gesamte Datensatz verwendet wird und nicht nur die Nulldurchgänge der Oszillationen im Signalverlauf, wie bei dem oben beschriebenen Ausführungsbeispiel bezüglich der Ermittlung der Phasendifferenzen.

Ein Terminal gestattet dem Benutzer die ermittelten Teilchengrößen abzufragen. Es ist im Computerprogramm aber auch vorgesehen, die Verteilung der gemessenen Teilchengrößen auszugeben und solche Verteilungen bezüglich der Akzeptanz des Laser-DopplerGerätes und verworfene Messungen zu korrigieren. Zur Korrektur für die verworfenen Messungen wird angenommen, daß es sich um solche Ereignisse handelt, die auf mehr als ein Teilchen im Meßvolumen zurückzuführen sind. Das Computerprogramm berechnet dann, wieviele Messungen aufgrund der angewandten Schnitte verworfen wurden und korrigiert die vermessene Verteilung entsprechend.

Ein solches Laser-Doppler-Gerät gestattet, mit hoher Genauigkeit Verteilungen für Teilchengrößen zu ermitteln, die nicht durch fehlerhafte Messungen aufgrund des Strahlprofils der Laserstrahlen 2 und 3 gestört sind.

Neben der Anordnung von nur zwei Detektoren 4 und 5 in der durch die negative x-Achse und die positive z-Achse gespannten Ebene, ist es auch möglich, zusätzliche Meßdetektoren zu verwenden, um dadurch Unstimmigkeiten In den Messungen feststellen zu können.
Es bietet sich aber auch an, ein weiteres Detektorpaar in der durch die positive x-Achse und die positive z-Achse aufgespannten Ebene anzuordnen, um dadurch die gewünschte weitere Kontrolle bezüglich Strahlprofilfehler zu erhalten, denn, wie bereits oben aufgeführt, die in dieser Ebene angeordneten Detektoren reagieren gegenüber den Detektoren 4 und 5 unterschiedlich auf die Strahlprofilfehler.

## Patentansprüche

1. Laser-Doppler-Gerät zum Messen des Durchmessers und der Geschwindigkeit eines sich in einer Strömung innerhalb eines Meßvolumens bewegenden Teilchens (1), dessen Durchmesser größer ist als etwa 1/5 der Ausdehnung des Meßvolumens, wobei das Meßvolumen als der Bereich bestimmt ist, in dem sich mindestens zwei von einer Vorrichtung erzeugte, zueinander in einer bestimmten Phasenbeziehung stehende Laserstrahlen (2, 3) kreuzen, mit mindestens zwei, auf das Meßvolumen ausgerichteten Detektor-Einheiten (4, 5) zur Erfassung und Detektierung der am zu vermessenden Teilchen (1) gestreuten Laserstrahlen und zur Abgabe von Signalen, deren Amplituden von der Intensität der erfaßten Streustrahlung abhängen und mit einer Signalverarbeitungseinrichtung zur Ermittlung der Größe des Teilchens (1) aus den Signalen der Detektor-Einheiten (4, 5), dadurch gekennzeichnet, daß die Laserstrahlen (2, 3) und die zwei Detektor-Einheiten (4, 5) mit einer Komponente des Strömungsvektors so angeordnet sind, daß die Strömungskomponente, die Ausbreitungsvektoren für die Laserstrahlen (2, 3) und die Detektorrichtungsvektoren (6, 7) für die Detektor-Einheiten (4, 5) in einer gemeinsamen Ebene liegen und daß die Detektor-Einheiten (4, 5) mit ihren Detektorrichtungsvektoren (6, 7) so in der Ebene angeordnet sind, daß beide Streulicht von demselben Teilchen (1) erfassen.

2. Laser-Doppler-Gerät nach Anspruch 1, dadurch gekennzeichnet, daß die Vorrichtung zur Erzeugung der Laserstrahlen (2, 3) ein optisches System aufweist, mittels welchem der Winkel a, unter dem die Laserstrahlen (2, 3) jeweils zur z-Achse im Meßvolumen aufeinandertreffen, veränderbar und wodurch das durch die beiden Laserstrahlen (2, 3) bestimmte Meßvolumen einstellbar ist.

3. Verfahren zum Betrieb eines Laser-Doppler-Gerätes nach Anspruch 1 oder 2, dadurch gekennzeichnet, daß die aufgrund der Bewegung des Teilchens (1) im Meßvolumen entstehenden Oszillationen der Signale der Detektoren-Einheiten (4, 5) registriert werden, daß die Phasendifferenz zwischen den Oszillationen beider Signale der Detektor-Einheiten (4, 5) bestimmt und daß die Phasendifferenz in einen die Größe des Teilchens bestimmenden Meßwert umgewandelt wird.

4. Verfahren nach Anspruch 3, dadurch gekennzeichnet, daß eine ermittelte Phasendifferenz dann verworfen wird, wenn sie beim Austritt bzw. Eintritt des Teilchens (1) in das Meßvolumen erzeugt wird und die Detektor-Einheiten (3, 4) so ausgerichtet sind, daß die entweder von der bezüglich der Strömungsrichtung hinteren bzw. vorderen Oberfläche des Teilchens (1) resultierenden Signale unterschieden werden können.

5. Verfahren nach Anspruch 3 oder 4, dadurch gekennzeichnet, daß die Phasendifferenzen dann verworfen werden, wenn die Amplitude der Oszillation des Signals einer Detektor-Einheit (4 bzw. 5) kleiner als das Produkt aus einem vorgegebenen Verhältniswert mit der maximalen Amplitude der während einer Bewegung des Teilchens (1) in der Detektor-Einheit (4 bzw. 5) erzeugten Oszillation ist.

6. Verfahren nach Anspruch 5, dadurch gekennzeichnet, daß der vorgegebene Verhältniswert 0,5 beträgt.

7. Verfahren nach einem der Ansprüche 3 bis 6, dadurch gekennzeichnet, daß aus der Signalhöhe mindestens einer der Detektor-Einheiten (4 bzw. 5) eine ungefähre Teilchengröße bestimmt und dieser Wert benutzt wird, um Mehrdeutigkeiten In der Phasendifferenz bezüglich 2π zu eliminieren.

8. Verfahren nach einem der Ansprüche 3 bis 7, dadurch gekennzeichnet, daß mehr als zwei Detektor-Einheiten angeordnet sind und die Phasendifferenzen zwischen jeweils zwei von diesen Detektor-Einheiten bestimmt und auf Übereinstimmung bezüglich gleicher Teilchengröße miteinander verglichen werden, um Unsicherheiten in den Phasendifferenzen bezüglich 2π zu eliminieren.

9. Verfahren nach Anspruch 7 oder 8, dadurch gekennzeichnet, daß die Phasendifferenzen, bei denen die Unsicherheiten bezüglich 2π eliminiert sind, zur Bestimmung einer mittleren gemessenen Teilchengröße gemittelt werden.

10. Verfahren nach einem der Ansprüche 3 bis 9, dadurch gekennzeichnet, daß die bei einem Durchlauf des Teilchens (1) durch das Meßvolumen bestimmten Phasendifferenzen oder die ihnen zugeordneten Meßwerte für die Größe des Teilchens (1) miteinander verglichen und bei außerhalb der Meßgenauigkeit liegenden Abweichungen sämtliche während des Durchlaufs aufgenommenen Meßwerte verworfen werden.

11. Verfahren nach einem der Ansprüche 3 bis 10, dadurch gekennzeichnet, daß die Signale der Detektor-Einheiten (4, 5) bei Durchlauf des Teilchens (1) durch das Meßvolumen mit theoretischen Signalverläufen, die für unterschiedliche Teilchengrößen und - geschwindigkeiten vorgegeben werden, verglichen und daß bei großen Abweichungen der Signalverläufe von den theoretischen Signalverläufen, die Meßwerte verworfen werden.

12. Verfahren nach einem der Ansprüche 3 bis 11, dadurch gekennzeichnet, daß eine Meßwertverteilung aus den gemessenen Teilchengrößen ermittelt und daß die Meßwertverteilung bezüglich einer durch das Meßvolumen gegebenen Akzeptanz und Verlusten aufgrund verworfener Messungen korrigiert werden.

13. Laser-Doppler-Gerät nach Anspruch 1 oder 2, dadurch gekennzeichnet, daß dieses zur Durchführung mindestens eines der Verfahren nach den Ansprüchen 3 bis 12 einen Computer enthält.

## Claims

1. Laser Doppler device for measuring the diameter and velocity of a particle (1) which is moving in a flow within a test volume and of which the diameter is greater than about 1/5 of the dimension of the test volume, the test volume being defined as the region in which at least two laser beams (2, 3) which are produced by a device and are in a specific phase relationship to one another intersect, with at least two detector units (4, 5) orientated toward the test volume for sensing and detecting the laser beams scattered on the particle (1) to be measured and for transmitting signals of which the amplitudes depend on the intensity of the sensed scattered radiation and with a signal processing system for determining the size of the particle (1) from the signals from the detector units (4, 5), characterized in that the laser beams (2, 3) and the two detector units (4, 5) are so arranged with a component of the flow vector that the flow component, the propagation vectors for the laser beams (2, 3) and the detector direction vectors (6, 7) for the detector units (4, 5) lie in a common plane and that the detector units (4, 5) with their detector direction vectors (6, 7) are arranged in the plane in such a way that they both sense scattered light from the same particle (1).

2. Laser Doppler device according to claim 1, characterized in that the device for producing the laser beams (2, 3) comprises an optical system by means of which the angle a at which the laser beams (2, 3) each impinge upon one another at the z-axis in the test volume can be varied and whereby the test volume defined by the two laser beams (2, 3) can be adjusted.

3. Method of operating a laser Doppler device according to claim 1 or 2, characterized in that the oscillations of the signals of the detector units (4, 5) occurring in the test volume owing to the movement of the particle (1) are recorded, in that the phase difference between the oscillations of the two signals of the detector units (4, 5) is defined and in that the phase difference is converted into a measured value defining the size of the particles.

4. Method according to claim 3, characterized in that a determined phase difference is rejected if it is produced during the egress or entry of the particle (1) into the test volume and the detector units (3, 4) are so orientated that the signals resulting either from the rear or front surface of the particle (1) with respect to the direction of flow can be distinguished.

5. Method according to claim 3 or 4, characterized in that the phase difference is rejected if the amplitude of the oscillation of the signal from a detector unit (4 or 5) is smaller than the product of a predetermined ratio value with the maximum amplitude of the oscillation produced during a movement of the particle (1) in the detector unit (4 or 5).

6. Method according to claim 5, characterized in that the predetermined ratio value is 0.5.

7. Method according to one of claims 3 to 6, characterized in that an approximate particle size is defined from the signal height of at least one of the detector units (4 or 5) and this value is used to eliminate ambiguities in the phase difference with respect to 2π.

8. Method according to one of claims 3 to 7, characterized in that more than two detector units are arranged and the phase differences between each two of these detector units are defined and compared for conformity with respect to identical particle size in order to eliminate uncertainties in the phase differences with respect to 2π.

9. Method according to claim 7 or 8, characterized in that the phase differences at which the uncertainties with respect to 2π are eliminated are averaged to define an average measured particle size.

10. Method according to one of claims 3 to 9, characterized in that the phase differences defined during a passage of the particle (1) through the test volume or the measured values allocated to them for the size of the particle (1) are compared with one another and any measured values picked up during passage are rejected in the case of deviations lying outside the measuring accuracy.

11. Method according to one of claims 3 to 10, characterized in that the signals from the detector units (4, 5) are compared, during passage of the particle (1) through the test volume, with theoretical signal trends predetermined for different particle eizes and velocities and in that the measured values are rejected if the signal trends differ greatly from the theoretical signal trends.

12. Method according to one of claims 3 to 11, characterized in that a measured value distribution is determined from the measured particle sizes and in that the measured value distribution is corrected with respect to acceptance provided by the test volume and losses owing to rejected measurements.

13. Laser Doppler device according to claim 1 or 2, characterized in that it contains a computer for carrying out at least one of the methods according to claims 3 to 12.

## Revendications

1. Dispositif laser à effet doppler pour la mesure du diamètre et de la vitesse d'une particule (1) se déplaçant dans un écoulement à l'intérieur d'un volume de mesure, particule dont le diamètre est supérieur à environ 1/5 de l'étendue du volume de mesure, le volume de mesure étant déterminé comme étant la zone dans laquelle se croisent au moins deux rayons laser (2, 3), générés par un appareil, placés en une relation de phase déterminée l'un par rapport à l'autre, avec au moins deux unités de détecteurs (4, 5) orientées sur le volume de mesure, pour appréhender et détecter les rayons laser dispersés sur les particules (1) à mesurer et pour fournir des signaux dont les amplitudes dépendent de l'intensité du rayonnement laser appréhendé et avec un dispositif de traitement de signal, pour déterminer la taille de la particule (1) à partir des signaux des unités de détecteurs (4, 5), caractérisé en ce que les rayons laser (2, 3) et les deux unités de détecteurs (4, 5) sont disposés avec une composante du vecteur d'écoulement, de manière que les composantes de vecteur d'écoulement, les vecteurs de propagation des rayons laser (2, 3) et les vecteurs directionnels de détecteur (6, 7) pour les unités de détecteurs (4, 5) soient situés dans un plan commun et en ce que les unités de détecteurs (4, 5), avec leurs vecteurs directionnels de détecteur (6, 7), soient disposés dans un plan faisant que les deux vecteurs appréhendent la lumière dispersée par cette même particule (1).

2. Dispositif laser à effet doppler selon la revendication 1, caractérisé en ce que l'appareil conçu pour générer les rayons laser (2, 3) présente un système optique au moyen duquel l'angle α, sous lequel les rayons laser (2, 3) rejoignent chaque fois par rapport à l'axe z dans le volume de mesure, est modifiable et faisant que le volume de mesure déterminé par les deux rayons laser (2, 3) est réglable.

3. Procédé de fonctionnement d'un dispositif laser à effet doppler selon la revendication 1 ou 2, caractérisé en ce que les oscillations produites dans le volume de mesure du fait du déplacement de la particule 1, oscillations des signaux des unités de détecteurs (4, 5), sont enregistrées, en ce que la différence de phase entre les oscillations des deux signaux des unités de détecteurs (4, 5) est déterminée et en ce que la différence de phase est convertie en une valeur de mesure déterminant la grandeur de la particule.

4. Procédé selon la revendication 3, caractérisé en ce qu'une différence de phase déterminée'est ensuite éliminée si elle est générée à la sortie, respectivement à l'entrée de la particule (1) dans le volume de mesure, et les unités de détecteurs (3, 4) étant orientées de manière que les signaux résultants soit de la surface avant ou arrière, par rapport à la direction d'écoulement, de la particule (1), puissent être distingués.

5. Procédé selon la revendication 3 ou 4, caractérisé en ce que les différences de phase sont éliminées si l'amplitude de l'oscillation du signal d'une unité de détecteur (4 ou 5) est inférieure au produit calculé à partir d'une valeur de rapport prédéterminée avec l'amplitude maximale de l'oscillation générée pendant un déplacement de la particule (1) dans l'unité de détecteur (4 ou 5).

6. Procédé selon la revendication 5, caractérisé en ce que le rapport prédéterminé est de 0,5.

7. Procédé selon l'une des revendications 3 à 6, caractérisé en ce qu'à partir de la valeur du signal, au moins l'une des unités de détecteurs (4 ou 5) détermine une grandeur de particule approximative, et cette valeur étant utilisée pour éliminer les ambiguïtés dans la différence de phase, par rapport à 2π.

8. Procédé selon l'une des revendications 3 à 7, caractérisé en ce qu'on dispose plus que deux unités de détecteur, et les différences de phase entre chaque fois deux de ces unités de détecteurs sont déterminées et comparées ensemble pour savoir s'il y a coïncidence concernant une grandeur de particule identique, pour éliminer les incertitudes au niveau des différences de phase, par rapport à 2π.

9. Procédé selon la revendication 7 ou 8, caractérisé en ce que les différences de phases, pour lesquelles les incertitudes concernant 2π sont éliminées, sont soumises à une formation de moyenne pour déterminer une grandeur de particule mesurée moyenne.

10. Procédé selon l'une des revendications 3 à 9, caractérisé en ce que les différences de phases déterminées lors d'un passage de la particule (1) à travers le volume de mesure, ou les valeurs de mesure leur étant associées pour la taille de la particule (1), sont comparées entre elles et, en cas d'écarts situés hors de la précision de mesure, l'ensemble des valeurs de mesure enregistrées pendant le passage sont éliminées.

11. Procédé selon l'une des revendications 3 à 10, caractérisé en ce que les signaux des unités de détecteurs (4, 5), lors du passage de la particule (1) à travers le volume de mesure, sont comparés à des allures de signaux théoriques, qui sont prédéterminées pour les différentes tailles et grandeurs de particules, on procède à une comparaison et, dans le cas où les écarts au niveau des allures de signaux sont trop grands, vis-à-vis des allures de signaux théoriques, on élimine les valeurs de mesure.

12. Procédé selon l'une des revendications 3 à 11, caractérisé en ce qu'on détermine une distribution de valeurs de mesure à partir des tailles de particules mesurées, et en ce que la distribution de valeurs de mesure, par rapport à une acceptance fournie par la valeur de mesure, et les pertes sont corrigées du fait des mesures éliminées.

13. Dispositif laser à effet doppler selon la revendication 1 ou 2, caractérisé en ce que ce dispositif contient un ordinateur pour effectuer au moins l'un des procédés des revendications 3 à 12.
